# EUROPÄISCHE PATENTSCHRIFT

(11) **EP 0 637 735 B1**
(45) Veröffentlichungstag und Bekanntmachung des Hinweises auf die Patenterteilung: **21.01.1998**
(21) Anmeldenummer: 94111149.4
(22) Anmeldetag: 18.07.1994
(51) Int. Cl.: G01L 5/16

(54) **Kraftmessvorrichtung**
Force measuring device
Dispositif de mesure de force

(30) Priorität: 06.08.1993 DE 4326491
(43) Veröffentlichungstag der Anmeldung: 08.02.1995
(73) Patentinhaber: Bayerische Motoren Werke Aktiengesellschaft, 80788 München (DE)
(72) Erfinder: Brandl, Sigfried, D-84109 Wörth (DE); Rinser, Rudolf, D-84109 Wörth/Isar (DE); Holbl, Leonhard, D-84416 Taufkirchen (DE)

(56) Entgegenhaltungen:
- WO-A-86/01597
- FR-A- 2 545 606
- US-A- 3 771 359
- US-A- 4 126 039
- US-A- 5 056 361

## Beschreibung

Die Erfindung bezieht sich auf eine Meßvorrichtung nach dem Oberbegriff des Patentanspruchs 1.

Eine derartige Meßvorrichtung ist aus WO-A-86 01 597 bekannt. Diese Meßvorrichtung enthält vier speichenförmig von einer zemtralen Meßplatte zu einem ringförmigen Träger umlaufenden Krenzstäben. Jeder Krenzstab besteht aus zwei um 90° gegeneinander verdrehten Plattern, welche Dehnungsmaßstreifen tragen.

Eine andere Meßvorrichtung dieser Art ist aus der DE 32 13 319 A1 bekannt. Die Verbindungselemente sind speichenartig ausgebildet und verlaufen zwischen der Meßplatte und dem torusförmigen Träger etwa mittig bezüglich der jeweiligen Kraftkomponente hin zu Sehnen, die im Träger senkrecht zur jeweiligen Kraftkomponente eingesetzt sind. Zum Vermeiden des Übersprechens einer Kraftkomponente auf die Geber für die andere Kraftkomponente sind die Sehnen selbst und die Verbindungselemente im Bereich der Sehnen deutlich verjüngt. Damit aber ergibt sich ein erheblicher konstruktiver Aufwand verbunden mit einem Stabilitätsproblem, das aus der Verjüngung der Sehnen und Verbindungselemente resultiert.

Der Erfindung liegt die Aufgabe zugrunde, eine Meßvorrichtung der eingangs genannten Art zu schaffen, die mit geringem konstruktiven Aufwand herstellbar ist und eine Bestimmung der jeweiligen Kraftkomponente ohne Einfluß durch die andere Kraftkomponente ermöglicht.

Die Erfindung löst diese Aufgabe durch die Merkmale des Patentanspruchs 1.

Bedingt durch die Ausbildung der Kreuz stäbe werden die den verschiedenen Kraftkomponenten zugeordneten Geber völlig voneinander entkoppelt. Über die Kreuzstäbe können auch dynamische Zug- und Druckkräfte in Richtung der je weiligen Kraftkomponente übertragen werden. Kräfte senkrecht zur dieser Wirkrichtung haben gegenläufige Längenänderungen der Teilstäbe für sich an deren Ober- und Unterseite zur Folge und werden bei entsprechender Beschaltung kompensiert. Die Empfindlichkeit läßt sich durch geeignete Abmessung der Teilstäbe einstellen. Probleme hinsichtlich der Stabilität lassen sich gleichzeitig problemlos durch entsprechende Wahl dieser Abmessungen und der Materialauswahl vermeiden.

Die weiteren Patentansprüche beschreiben vorteilhafte Ausgestaltungen der Erfindung.

In der Zeichnung ist ein Ausführungsbeispiel der Erfindung dargestellt. Es zeigt
- Fig.1: eine Meßvorrichtung gemäß der Erfindung in perspektivischer Darstellung und
- Fig.2 und 3: Diagramme zur Erläuterung der elektrischen Verschaltung der Meßvorrichtung.

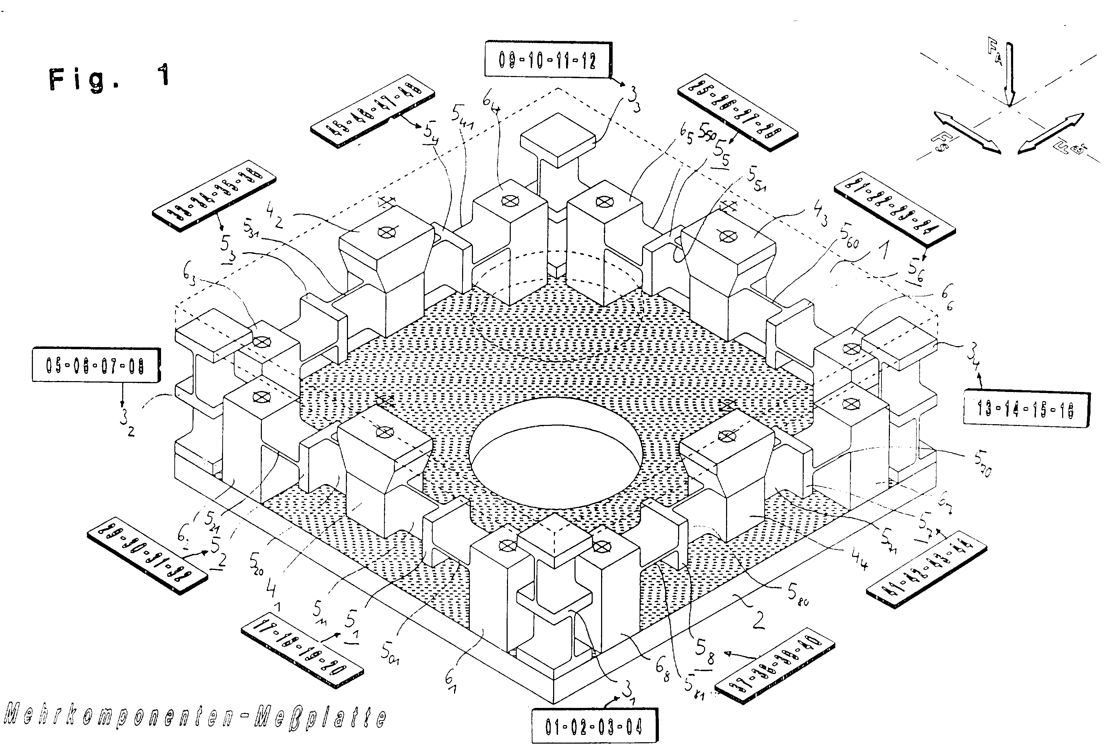

Die in Figur 1 dargestellte Meßvorrichtung erhält als zentrales Element eine Meßplatte 1, die schwimmend auf einer Grundplatte 2 gelagert ist. Vier vertikal verlaufende Kreuzstäbe 3₁ bis 3₄ dienen dabei als Lager. An der Meßplatte 1 sind nach unten reichende Fortsätze 4₁ bis 4₄ befestigt, an denen im wesentlichen horizontal verlaufende Kreuzstäbe 5₁ bis 5₈ mit ihrem einen Ende angreifen. Die Kreuzstäbe 5₁, 5₂, 5₅, und 5₆ einerseits und 5₃, 5₄, 5₇ und 5₈ andererseits verlaufen jeweils parallel zueinander. Diese Quadrupel von Kreuzstäben verlaufen im wesentlichen senkrecht zueinander.

Jeder der Kreuzstäbe 3₁ bis 3₄ und 5₁ bis 5₈ ist an seinem anderen Ende auf der Grundplatte befestigt. Hierzu dienen Endteile 6₁ bis 6₈. Jeder Kreuzstab besteht aus zwei plattenförmigen Teilstäben 5₁₀,5₁₁,5₂₀,5₂₁,...5₈₀,5₈₁, die gegeneinander um 90° bezüglich der Längsachse gedreht sind. Die Längsachse ihrerseits verläuft in Richtung der jeweiligen Kraftkomponente.

Mit der Meßvorrichtung ist es möglich, Kräfte in den Koordinatenrichtungen, die auf der Meßplatte 1 wirken, zu detektieren. Hierzu sind die Kreuzstäbe 3₁ bis 3₄ und 5₁ bis 5₈ jeweils auf einem der Teilstäbe beidseitig mit Weggebern, wie Dehnungsmeßstreifen oder dgl., versehen.

Jede Kraftkomponente, die in einer der Koordinatenrichtungen wirkt, wird durch die Weggeber der in der zugehörigen Kraftrichtung verlaufenden Kreuzstäbe als Längenänderung dieser Kreuzstäbe erkannt. Die von den auf den Weggebern der Quadrupel von Kreuzstäben gelieferten Meßsignale werden addiert und ergeben insgesamt ein Meßsignal, das der jeweiligen Kraftkomponente proportional ist.

Zur Erläuterung sind die Kräfte wie in Fig.1 gezeigt gerichtet und mit F_{S}, F_{Br} und F_{A} (svw. Seiten-, Brems- und Aufstandskraft) bezeichnet. Ferner sind die auf den einzelnen Kreuzstäben angeordneten, nicht im einzelnen dargestellten, als Dehnungsmeßstreifen (DMS) ausgeführten Weggeber als Zahlen symbolisiert. Es handelt sich dabei für die Kreuzstäbe 3₁ bis 3₄ (F_{A}) um die Weggeber, die mit den Zahlen 01 - 04, 05 - 08, 09 - 12 und 13 - 16 versehen sind. Kräfte F_{S} in einer horizontalen Richtung werden mit Hilfe der Weggeber auf den Kreuzstäben 5₁, 5₂, 5₅ und 5₆ nachgewiesen. Die Weggeber sind mit den Zahlen 17 - 20, 29 - 32, 25 - 28 und 21 - 24 symbolisiert. In der dazu senkrechten horizontalen Richtung (F_{Br}) sprechen die Weggeber auf den Kreuzstäben 5₃, 5₄, 5₇ und 5₈ an. Sie sind mit den Zahlen 33 - 36, 45 - 48, 37 - 40 und 41 - 44 bezeichnet.

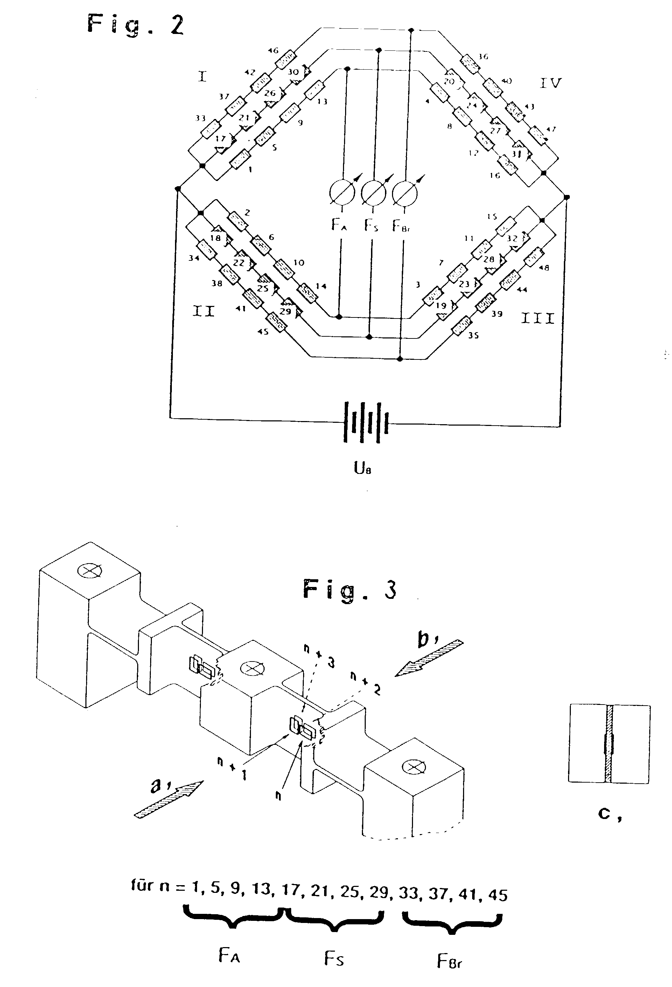

Die Verschaltung der Weggeber für die einzelnen Kraftkomponenten erfolgt wie in Fig. 2 dargestellt. Für die Kraft F_{A} werden die vier Kreuzstäbe 3₁ - 3₄ mit ihren vier Dehnungsmeßstreifen (01-16) als eine Vollbrücke betrachtet. Die Brückenzweige I-IV bestehen aus je vier Meßstreifen. Die vier DMS, welche sich an den Kreuzstäben örtlich entsprechen, werden jeweils in einem Zweig der Vollbrückenschaltung in Reihe geschaltet. Durch diese Reihenschaltung ergibt sich eine Integration des Meßsignales und die Belastung der Meßplatte 1 ist auf der vollen Fläche ohne Kalibrierwertveränderung möglich.

Für die Kraft F_{S} wird eine analoge Reihenschaltung der Dehnungsmeßstreifen 17-32 vorgenommen. Dabei wird für wechselnde Kraftrichtungen ein Vorzeichenwechsel schaltungstechnisch vorgesehen. Hierfür werden die auf Längsdehnung empfindlichen DMS 17 und 21 (Kreuzstab 5₁ und 5₆) mit den auf Querdehnung empfindlichen DMS 26 und 30 im positiven Brückenzweig I in Reihe verschaltet. Die den vorgenannten Meßstreifen an den jeweiligen Kreuzstäben gegenüberliegenden Meßstreifen 19 und 23 bzw. 28 und 32 werden in o.g. Art und Weise im zweiten positiven Brückenzweig III verschaltet. Für einen Vorzeichenwechsel bei wechselnder Kraftrichtung werden die längsempfindlichen DMS 25 und 29 bzw. 27 und 31 der Kreuzstäbe 5₂ und 5₅ mit den querempfindlichen DMS 18 und 22 bzw. 20 und 24 der Kreuzstäbe 5₁ und 5₆ in den negativen Brückenzweigen II und IV jeweils, wie vorher genannt, in Reihe geschaltet. Durch die Reihenschaltung der DMS der jeweils gegenüberliegenden Kreuzstäbe wird eine gleichmäßige Empfindlichkeit der Meßstelle auch bei außermittiger Krafteinleitung erreicht.

Für die Bestimmung der Kraft F_{Br} (Kreuzstäbe 5₃, 5₄, 5₇ und 5₈ mit den Meßstreifen 33-48) gilt sinngemäß das für die Kraft F_{S} aufgeführte Verschaltungsprinzip.

Zur weiteren Erläuterung der schaltungstechnischen Realisierung ist in Fig. 3 die Anordnung der Dehnungsmeßstreifen auf jedem der Kreuzstäben 3₁ - 3₄ bzw. 5₁ - 5₈ exemplarisch an einem Kreuzstab perspektivisch und im Schnitt gezeigt. Die Zuordnung der mit Zahlen 01 - 48 (=n, n+1, n+2, n+3 mit n=1,5,9,...45) bezeichneten DMS zu den Kräften F_{A}, F_{S} und F_{Br} erfolgt wie angegeben entsprechend der Variablen n. Z.B. ergibt sich für n=21: Die vier DMS 21 - 24 sind wie in Fig. 3 dargestellt auf dem Kreuzstab 5₆ (Fig. 1) angeordnet und wie in Fig. 2 gezeigt verschaltet.

Die Verwendung der in der erfindungsgemäßen Weise ausgebildeten Kreuzstäben bietet gegenüber herkömmlichen Meßvorrichtungen den Vorteil, nur Kräfte zu detektieren, die in Richtung der Kreuzstäbe ausgerichtet sind. Durch die besondere Gestaltung der Kreuz stäbe in Form der beiden Teilstäbe wird jedes Übersprechen einer dazu senkrecht verlaufenden Kraftkomponente vermieden. Die Kreuzstäbe ihrerseits sind einfach und genau zu fertigen. Ihr Querschnitt ist ohneweiteres auf die Größe der zu erfassenen Kräfte abzustimmen. Damit wird es möglich, die Empfindlichkeit in der jeweiligen Kraftrichtung einzustellen und frei von der Empfindlichkeit in den anderen beiden Kraftrichtungen zu wählen. Die additive Berücksichtigung der für jede Kraftrichtung vorgesehenen 4x4=16 Einzelmeßgebern führt dazu, auch bei einer außermittigen Krafteinleitung die jeweilige Kraftkomponente einwandfrei zu detektieren ist. Da Druck- und Zugkräfte übertragen werden können, lassen sich auch dynamisch wirkende Kräfte mit einfachen Gebern bei leichter Nachjustierbarkeit detektieren.

## Patentansprüche

1. Meßvorrichtung für zwei senkrecht zueinander und in einer horizontalen Ebene verlaufenden Kräfte, mit einem Träger (2) und einer demgegenüber unter dem Einfluß der Kräfte relativ beweglichen Meßplatte (1), die über symmetrisch zueinander verlaufende Kreuzstäbe (5₁-5₈), die aus zwei plattenförmigen und längs ihrer in Richtung der jeweiligen Kraftkomponente verlaufenden Achse um 90° gegeneinander verdrehten Teilstäben bestehen, starr mit dem Träger (2) verbunden ist, dadurch gekennzeichnet, daß die Meßplatte (1) über dem Träger (2) angeordnet ist und nach unten reichende Fortsätze (4₁-4₄) aufweist, an denen die Kreuzstäbe (5₁-5₈) mit ihrem einen Ende angreifen, wobei die anderen Enden der Kreuzstäbe (5₁-5₈) mit den Eckpunkten des Trägers (2) verbunden sind, so daß die Kreuzstäbe (5₁-5₈) im wesentlichen horizontal an den Seiten der Meßplatte (1) und des Trägers (2) verlaufen.

2. Meßvorrichtung nach Anspruch 1, **dadurch gekennzeichnet,** daß jeweils zwei Kreuzstäbe (5₁, 5₂; 5₃, 5₄; 5₅, 5₆, 5₇, 5₈) symmetrisch bezüglich der Fortsätze (4₁-4₄) angeordnet sind.

3. Meßvorrichtung nach Anspruch 1 oder 2, dadurch gekennzeichnet, daß zur Bestimmung jeder horizontalen Kraftkomponente parallel zueinander angeordnete Kreuzstäbe mit an jedem Teilstab beidseitig angeordneten Gebern (17-32; 33-49) für ihre axiale Länge versehen sind und die Meßsignale der korrespondierenden Geber addiert sind.

## Claims

1. A device for measuring two forces extending perpendicularly to one another and in a horizontal plane, comprising a support (2) and a measuring plate (1) movable relative to the support when influenced by the forces, the plate being rigidly connected to the support (2) via crossbars (5₁-5₈) which extend symmetrically relatively to one another and comprise two plate-shaped component bars at an angle of 90° relative to one another about their axis extending in the direction of the respective component of force, characterised in that the measuring plate (1) is disposed over the support (2) and has extensions (4₁ - 4₄) projecting thereunder engaged by respective ends of the crossbars (5₁ - 5₈), the other ends of the crossbars (5₁ - 5₈) being connected to the corner points of the support (2), so that the crossbars (5₁ - 5₈) extend substantially horizontally at the sides of the measuring plate (1) and of the support (2).

2. A measuring device according to claim 1, characterised in that each pair of crossbars (5₁, 5₂; 5₃, 5₄; 5₅, 5₆; 5₇, 5₈) are symmetrically disposed relative to the extensions (4₁ - 4₄).

3. A measuring device according to claim 1 or 2, characterised in that in order to determine each horizontal component of force, crossbars disposed parallel to one another are provided along their axial length with pick-ups (17 - 32; 33 - 39) disposed on both sides of each component bar, and the measuring signals from corresponding pick-ups are added.

## Revendications

1. Dispositif de mesure pour deux forces qui s'étendent de façon perpendiculaire l'une à l'autre et dans un même plan horizontal, comprenant un support (2) et par contre une plaque de mesure (1), relativement mobile sous l'influence des forces, qui est relié de façon rigide au support (2) au moyen de tiges en croix (5₁ - 5₈) qui s'étendent de façon symétrique l'une par rapport à l'autre et qui se composent de deux tiges partielles en forme de plaque, et qui sont tournées à 90° l'une par rapport à l'autre le long de leur axe qui s'étend dans le sens de la composante de force correspondante,
caractérisé en ce que
la plaque de mesure (1) est disposée sur le support (2) et présente des prolongements (4₁ - 4₄), orientés vers le bas, sur lesquels viennent en prise les tiges en croix (5₁ - 5₈) par l'une de leurs extrémités, les autres extrémités des tiges en croix (5₁ - 5₈) étant reliées aux angles du support (2), de telle sorte que les tiges en croix (5₁ - 5₈) s'étendent de façon sensiblement horizontale sur les côtés de la plaque de mesure (1) et du support (2).

2. Dispositif de mesure selon la revendication 1,
caractérisé en ce que
respectivement deux tiges en croix (5₁, 5₂ ; 5₃, 5₄ ; 5₅, 5₆; 5₇, 5₈) sont disposées de façon symétrique par rapport aux prolongements (4₁ - 4₄).

3. Dispositif de mesure selon la revendication 1 ou 2,
caractérisé en ce que
• pour déterminer chaque composante horizontale de force on prévoit des tiges en croix, disposées parallèlement les unes aux autres, avec pour leur longueur axiale des détecteurs (17 - 32 ; 33 - 49), disposés des deux côtés sur chaque tige partielle, et
• on additionne les signaux de mesure des détecteurs correspondants.
